# EUROPEAN PATENT APPLICATION

(11) **EP 1 707 276 A2**
(43) Date of publication of application: **04.10.2006**
(21) Application number: 06008481.1
(22) Date of filing: 06.07.2001
(51) Int. Cl.: B07C 7/00, B07C 5/36, B07C 3/02

(54) **Shipment sorting system**

(62) Divisional of application: 01305868.0
(71) Applicant: AT&C Co., Ltd., Joetsu-shi, Niigata 942-0061 (JP)
(72) Inventor: Takizawa, Chiyuki, Joetsu-shi, Niigata 942-0061 (JP)
(74) Representative: Wilson Gunn

(57) **Abstract**

A shipment sorting system carries unit cases containing goods to be shipped through a conveyor to a sorting-for-shipment area, sorting there the goods according to the orders from purchasers, and transferring the sorted goods by carts for shipment, wherein a buffer storage line to receive unit cases carried from an inflow area is provided to the conveyor leading to the sorting for-shipment area.

## Description

### BACKGROUND OF THE INVENTION

### Field of the Invention

The present invention relates to a system for sorting commercial articles particularly to a system suitable for use at a distribution center which sorts a wide variety of commercial articles by small amounts according to their destinations.

### Description of the Related Art

Conventionally, commercial , goods to be distributed to retailers such as super-markets or convenience stores are delivered, for example, by trucks from a center serving as a base to and from which commercial goods are concentrated and dispersed. Commercial goods to be distributed to retailers are collected by the vendors (wholesalers) of those goods and then sent by them to a distribution center where those goods are sorted by ordered amounts according to the retailers to which they are to be sent, and the goods thus sorted by ordered amounts are distributed according to their destinations.

Commercial goods sent by vendors to a distribution center (transportation center) are divided into two classes at an entry dock according to whether they should be stored or passed. Some commercial goods are stored in a storage area by palettes, cartons, pieces, or boluses.

For storage, for example, an automated storage/retrieval system (AS/RS) or a palette rack coupled with the use of a forklift is used. The AS/RS includes storage racks with pick-up conveyors between the rows of racks, and stacking cranes. Commercial goods (existing as units such as cartons or boluses) on palettes placed on a rack are taken out as appropriate by a hauler according to shipment information, and transferred onto a conveyor for shipment.

Commercial goods thus picked are sent to a preparatory sorting area where, if goods exist as pieces or boluses, they are packed into containers or cartons. The containers and cartons are then transferred to a sorting area for shipment where they are sorted according to the purchasers to which they are to be sent. Then, they are stacked on cage carriers, and transferred to trucks for shipment.

Sorting is performed as follows. Goods sent by providers are given labels printing data necessary for sorting such as the kind, number, purchaser, etc. of the goods. Goods with labels attached are placed on trays and carried through a conveyor to a sorting area.

Next, scanners placed at respective sorting blocks and connected to a controller read the data, and distribute required amounts of goods to the slots of nominated blocks according to the instructions from the controller. Repetition of this operation results in the distribution of goods to the sorting blocks according to the orders from purchasers.

During this operation, barcodes printed on the label of each good are read by the scanner. On the label two kinds of barcode are printed: one includes information necessary for managing the good, and the other information necessary for distributing the good. Thus, when goods are received, a scanner placed at an inlet reads the barcode necessary for good management to check the contents of the goods, and the goods are guided from there to a line. Then, another scanner reads the barcode for good distribution.

The barcode is prepared based on JAN (Japan Article Number) or ITF (Interleaved Two of Five) which deals with the information related with commercial goods and their cases.

The goods thus sorted are carried separately, and required amounts of them are transferred into containers arranged along conveyor routes according to destinations. Cart drivers drive carts carrying containers along circuit routes connecting junction areas where the containers are classified according to their destinations, or transfer disjoined goods on their carts into containers.

At a distribution center, goods are classified according to the purchasers and categories, and to the aisles and racks of the purchasers' shops where they are to be displayed for sale, and separated according to the classification. If required amounts of them are packed in cartons (made of paper), the goods are handled as cartons. If goods exist as disjoined pieces, they are divided by required amounts, and the required amounts are put into foldable plastic containers in the order of arrival. The cartons and containers are then loaded on cargo carriers having casters such as carts or wheeled cages, or on carrying means such as dolleys or handcarts.

Then, they are sent to shipment lines, transferred to trucks, and distributed to individual shops for sale. The goods thus distributed to individual shops may be directly transferred to the racks of the shops, to be arranged there for sale, or may be temporarily stored in the back rooms of the shops. At a distribution center, commercial goods are loaded on carts or wheeled cages, with no due attention being paid to the characteristics of the goods, the state of their packages, the state of their loading, or, if the goods are classified to the same category, the racks of the shop to which they will be displayed for sale, and the order of display.

Thus, during transference, a plastic container may be placed on a cardboard box; a heavy object may be placed above a light object; a good to be displayed on a rack may coexist with another good to be stored in a storeroom; or a good to be displayed on a rack may coexist with another good to be displayed on a different rack.

If what is described above happens, the cardboard carton or the light object might collapse, or the good might be wrongly stored or placed on a wrong rack for display, and, for correcting the error, it might be required to make repeated to-and-fro movements between the rack and the storage room, or between the different racks. To avoid this, the shop manager, when he receives goods in, for example, a wheeled cage, must take out them all from the wheeled cage, and reclassify them according to the characteristics of the goods, their packages, and the racks on which they are to be displayed for sale.

Of those goods, some must be placed on racks for display, others in a cooled display case, and still others in the storeroom. However, it may take long to distribute them all to proper places, and goods requiring cooled or frozen storage to keep freshness may be left without receiving no proper care for temperature management.

### SUMMARY OF THE INVENTION

The object of this invention is to provide a system for classifying commercial articles whereby it is possible to improve efficiency when it is required to classify a wide variety of goods by small amounts according to the orders from purchasers.

To achieve the above object, a sorting for shipment system according to this invention carries unit cases containing goods to be shipped through a conveyor to a sorting-for-shipment area, sorting there the goods according to the orders from purchasers, and transferring the sorted goods by carts for shipment, wherein a buffer storage line to receive unit cases carried from an inflow area is provided to the conveyor leading to the sorting-for-shipment area.

With the sorting-for-shipment system of this invention being configured as above, it is possible to store containers and cartons sent from a storage area or from an inflow area at the buffer storage line, and thus to selectively transport the containers and cartons that meet given stacking requirements in an orderly manner.

This arrangement will make it possible to stack goods in the same category in different wheeled cages according to the location of the racks on which they will be displayed for sale, and the state and weight of their cases.

### BRIEF DESCRIPTION OF THE DRAWINGS

Fig. 1 is a block diagram of a distribution center to which this invention is applied, divided by functions.
Fig. 2 is a flowchart of the steps necessary for sorting goods at an inflow area of the distribution center as depicted in Fig. 1.
Fig. 3 is a block diagram for explaining the definitions of a shop group and SEQing group to which goods are assigned at the initial phase of inflow as depicted in Fig. 2.
Fig. 4 is a flowchart for illustrating the generation of data necessary for controlling good handling in a distribution center as depicted in Fig. 1, and the control steps based on the data.
Fig. 5 is a flowchart for illustrating the generation of data necessary for controlling good handling in a distribution center as depicted in Fig. 1, and the control steps based on the data.
Fig. 6 is a flowchart for illustrating the generation of data necessary for controlling good handling in a distribution center as depicted in Fig. 1, and the control steps based on the data.
Fig. 7 is a block diagram for illustrating the composition of a control system of the shipment sorting system of this invention.
Fig. 8 is a block diagram for illustrating the composition of a control system of the shipment sorting system of this invention.
Fig. 9 is a flat view of one example of a buffer control line incorporated in the shipment sorting system of this invention.
Fig. 10 is a schematic flat view of a buffer control line based on a loop used in the shipment sorting system of this invention.
Fig. 11 is a schematic flat view of a system comprising a main loop line and sub-loop lines incorporated in a buffer control line of the shipment sorting system of this invention.
Fig. 12 is a schematic flat view of one example of the sub-loop line area as depicted in Fig. 11.
Fig. 13 is a block diagram of a variant of the sub-loop line areas as depicted in Fig. 11 in which different sub-loop areas treat respetive requirements.
Fig. 14 is a schematic flat view of an exemplary multi-layered sub-loop line area incorporated in a buffer control line of the shipment sorting system of this invention.
Fig. 15 is a schematic flat view of a buffer control line comprising plural straight storage lines based on a midway return mode of the shipment sorting system of this invention.
Fig. 16 is a flat view of an exemplary distribution center incorporating the buffer control line as depicted in Fig. 15.
Fig. 17A is a perspective view of a shoot line at a shipment sorting area of this invention; and Fig. 17B is perspective and flat views of a shoot line of a conventional shipment sorting area.
Fig. 18A is a perspective view of a sensor and a display device provided to the exit end of a multi-layered shoot line of this invention; and Fig. 18B is a perspective view of a handcart used in the conventional system.

### DESCRIPTION OF THE PREFERRED EMBODIMENTS

The embodiments of this invention will be described below with reference to the attached figures.

### (First Embodiment)

A new system according to this invention allows systematization of the works required for a distribution (transportation) center, more particularly, this system allows goods to be stacked in wheeled cages so that they may be delivered to individual shops, being classified by sale areas or by the order of display.

This system, by meeting the following requirements, simplifies the work, ensures speedy, productive, and precise advancement of the work without missing any good, and makes checking easy.

### 1) Prerequisites

1-1) Goods should be transferred to wheeled cages, divided:
   (1) By purchasers,
   (2) In order of arrival from providers,
   (3) By delivery routes,
   (4) By intermediary distribution centers,
   (5) By intermediary distribution agents,
   (6) Goods to be stored in the backroom of a shop should be separated (it should be determined for a given good whether it will be stored temporarily in a backroom or it will be immediately displayed for sale),
   (7) By categories,
   (8) By display aisles,
   (9) In order of display,
   (10) Materials and products should be separated,
   (11) Goods requiring storage at different temperatures should be separated, and
   (12) Goods requiring storage at different temperatures but able to be delivered in a same truck, and goods requiring storage at different temperatures and to be delivered separately should be separated.
1-2) Goods should be stacked on a wheeled cage meeting the requirements introduced in accordance with:
   (1) their weight, and
   (2) the form of their case,
      a. Carton,
      b. Plastic container,
      c. Unit box having the same base size and capable of being stacked into a pile.

These requirements may be freely introduced by the user of the system of this invention, and the system will function on the requirements selected by the user.

### 2) The requirements for the work of a distribution (transportation) center and the flow of steps underlying the work

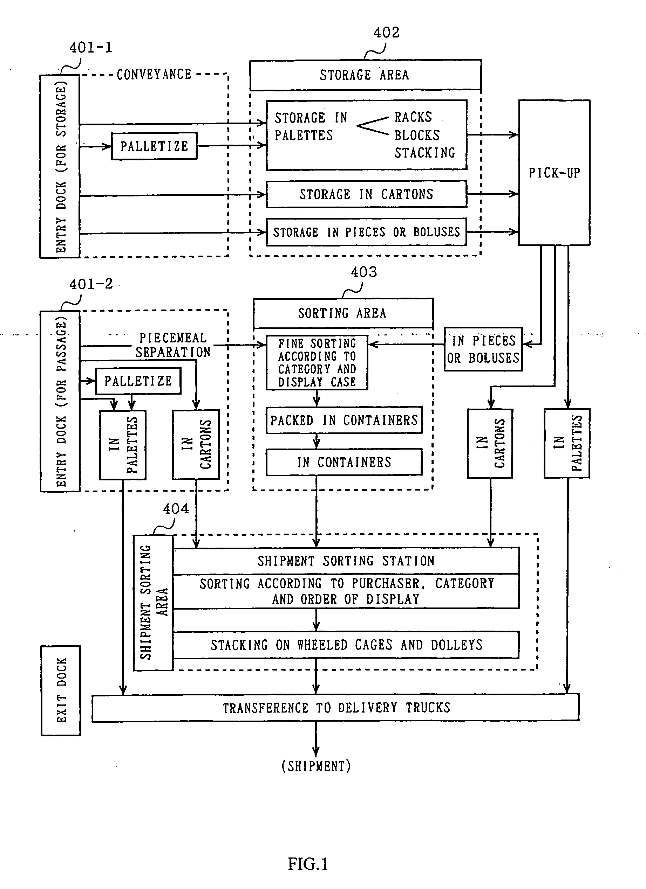

Fig. 1 is a functional block diagram of a distribution center to which the sorting system of this invention is applied. As shown in the figure, the distribution center is roughly divided into four areas: inflow docks 401 (for storage and passage), a storage area 402, an inflow sorting area 403 and a shipment sorting area 404.

Cartons picked up from the storage area 402, cartons passed from the inflow dock 401-2, and containers which are packed with inflow piecemeal goods and picked goods at the inflow sorting area 403 concentrate to the shipment sorting area 404 where goods are sorted according to purchasers, categories, and order of display, and then goods are stacked on wheeled cages, dollies and handcarts, to be transferred to vehicles for shipment.

### 3) Inflow goods should be received to meet following requirements.

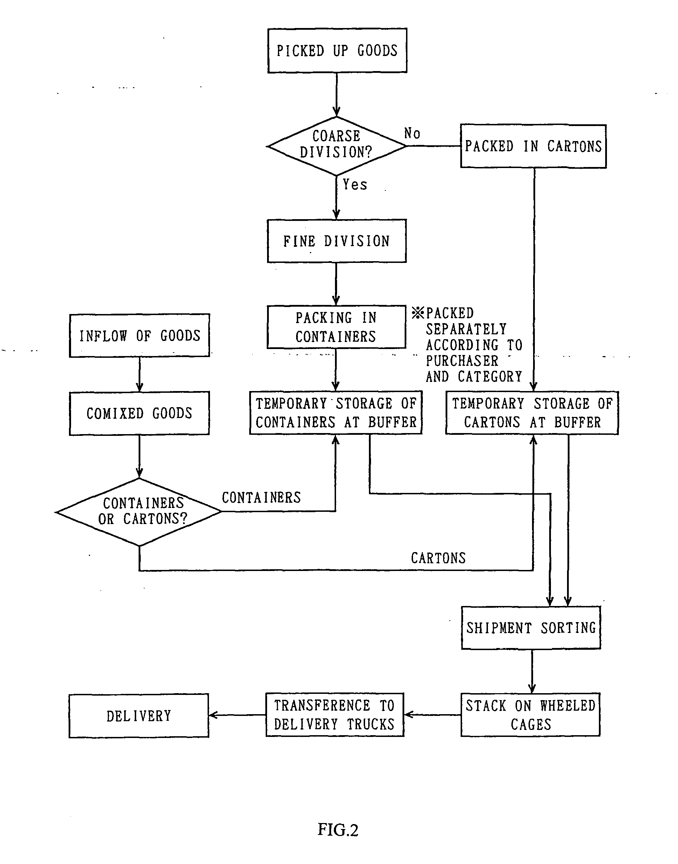

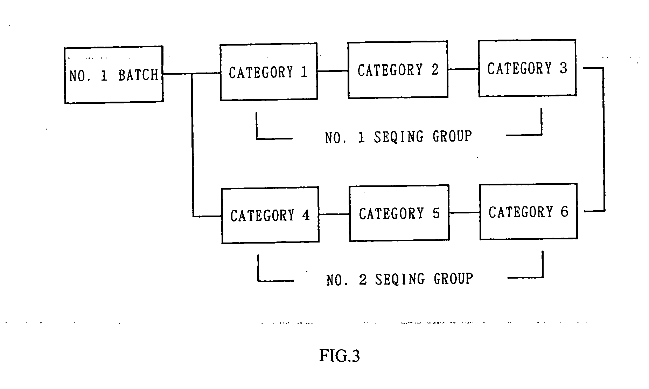

3-1) Inflow goods to this system are divided into shop groups each comprising two sequencing groups (SEQing groups) (see Fig. 3). For each shop group, goods are divided according to their packed form: one group includes goods existing as separate pieces and collected in' containers, and the other goods packed in cartons (see Fig. 2).
   The data of containers and cartons necessary for hauling are automatically provided through SS (or PHS) wireless communication to terminals near the haulers working at a pick-up area, a storage area, aisles, etc,
3-2) The hauler, in accordance with the data indicated on his display, picks up the necessary amounts of necessary goods., The data are transmitted to the haulers arranged along a row of racks in accordance with the time sequence of their pick-up works. If haulers want to work on a certain row of racks and inform of it to the server through a nearby terminal, the server will automatically transmit necessary data to the haulers in accordance with the time sequence of their pick-up works.
3-3) Fig. 2 is a flowchart of the steps necessary for sorting goods at an inflow area of the distribution center as depicted in Fig. 1. Goods, after being picked up, are handled as shown in Fig. 2 and shipped. To put it more specifically, picked goods are roughly divided into two groups: one group is packed in containers and the other in cartons. Containers and cartons then go to respective buffer areas where they are sorted according to purchasers, and transferred to a shipment sorting area, that is, a feature of this invention.

### 4) Definition of the shop group and SEQing group

Fig. 3 is a block diagram for explaining the definitions of a shop group and SEQing group to which goods are assigned at the initial phase of inflow as depicted in Fig. 2. The shop group is a unit group of shops to which goods are distributed, while the SEQgroup is a unit group of categories under which the goods of a shop group are put.

Assume that a distribution center distributes goods to be classified under fifteen categories to thirty shops. Then, the group composition will be as depicted in Fig. 3. In this example, a shop group contains ten shops; and for each shop group, two SEQing groups Nos. 1 and 2 are treated in parallel without any interruption.

Actually, hauling and sorting are carried out at the same time for both SEQing groups; one SEQing group is sent to a shipment sorting area while the other SEQing group is sent to a buffer area; and how sorting proceeds at the shipment sorting area is fed back to the buffer area to control the timing.

This arrangement will make it possible to advance the work without interruption, thereby increasing the speed and efficiency of the work. Such parallel handling may proceed on three or more SEQing groups as long as the capacity of buffer area permits.

### 5) Goods should be transferred to wheeled cages, divided:

(1) By purchasers,
(2) By categories,
(3) In order of display when goods are under the same category,
(4) By the kind of cases.

### 6) Generation of data necessary for control and flow of the data

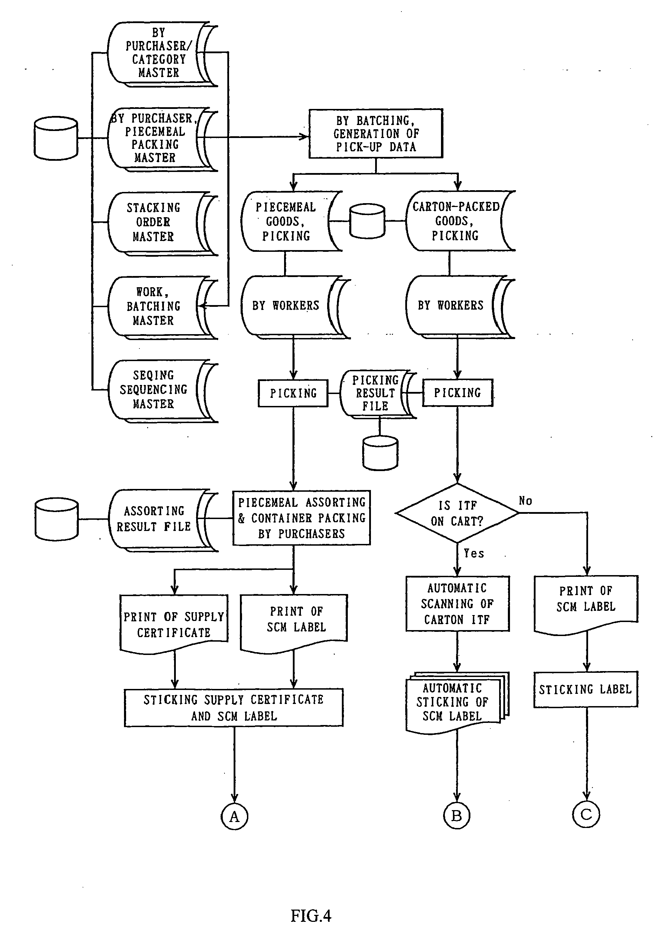

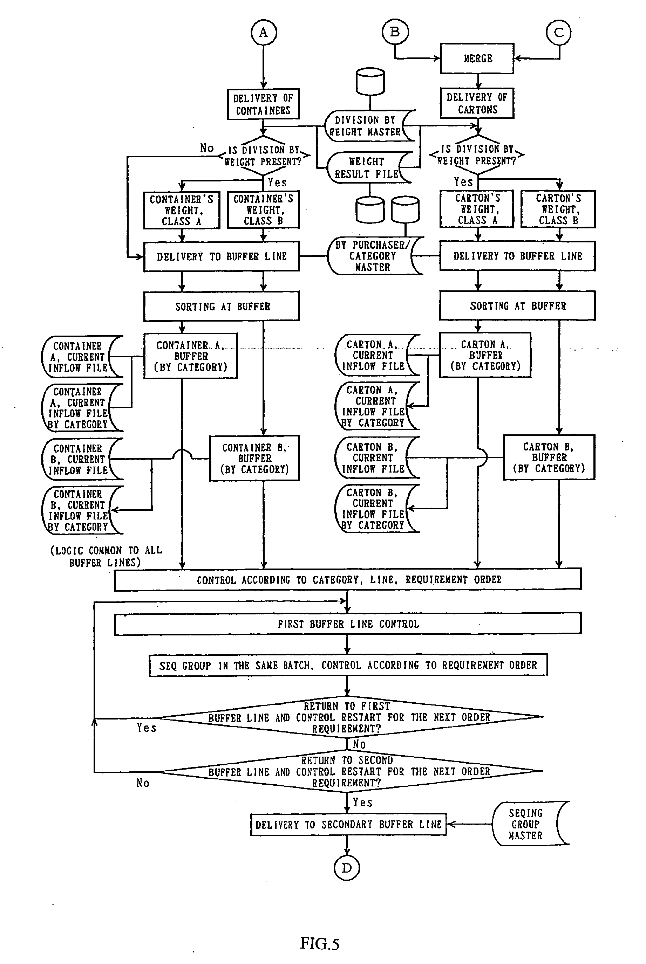

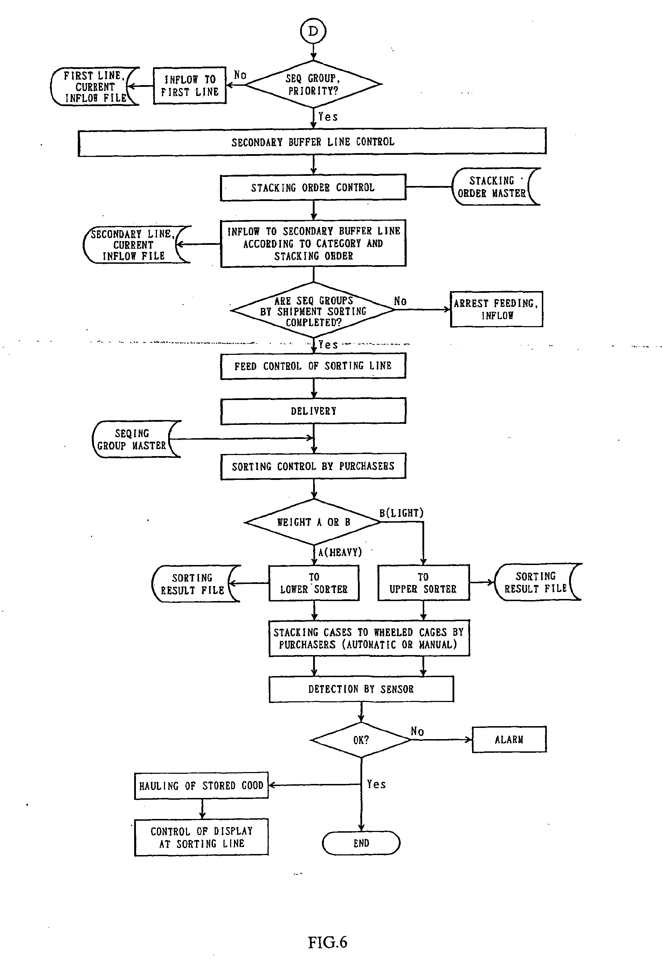

Figs. 4 to 6 are flowcharts for illustrating the generation of data necessary for controlling good handling in a distribution center as depicted in Fig. 1, and the control steps based on the data. The charts deal with the steps controlling the handling of goods existing as cartons and containers. As shown in Figs. 4 and 5, inflow pieces are sorted according to purchasers and categories; the sorted groups are put in different containers; containers and cartons are divided according to their weights; and they are further sorted according to categories at a buffer sorting area. Then, they are sent to a buffer control line which is described later.

### 7) Composition of a control system

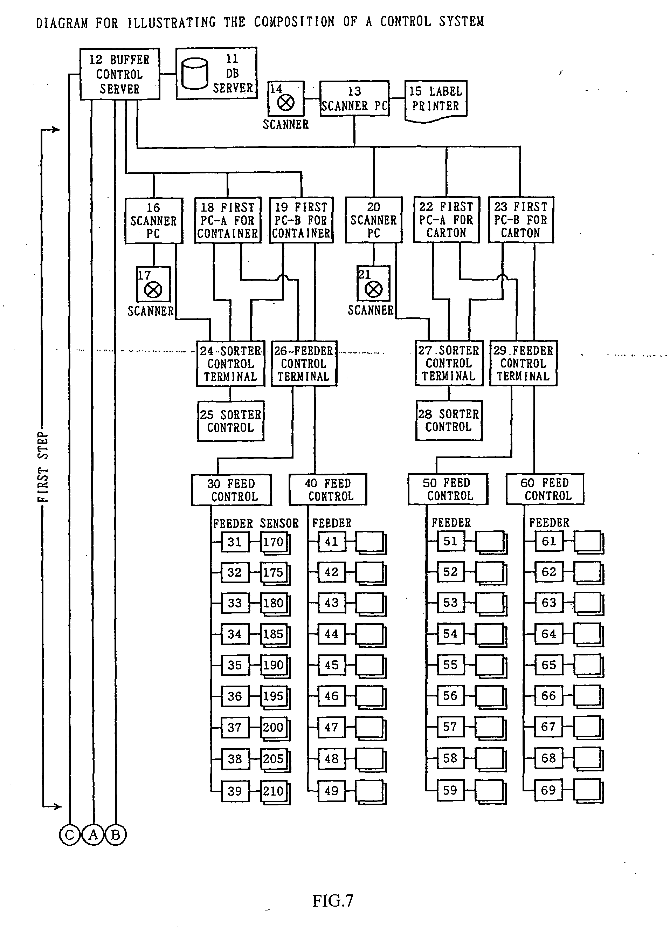

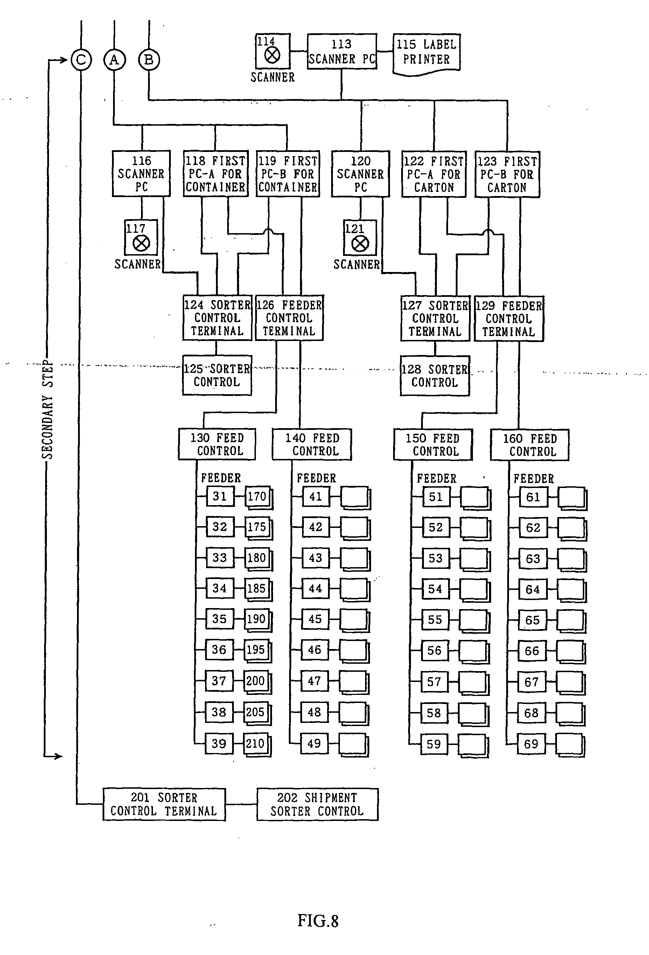

Figs. 7 and 8 are block diagrams for illustrating the composition of a control system of the shipment sorting system of this invention. The first and second steps may be coalesced into one step. The number of subsystems may be determined dependent on the requirement for sorting packed goods, and the number of treated goods.

### 8) An example of a buffer control line for shipment

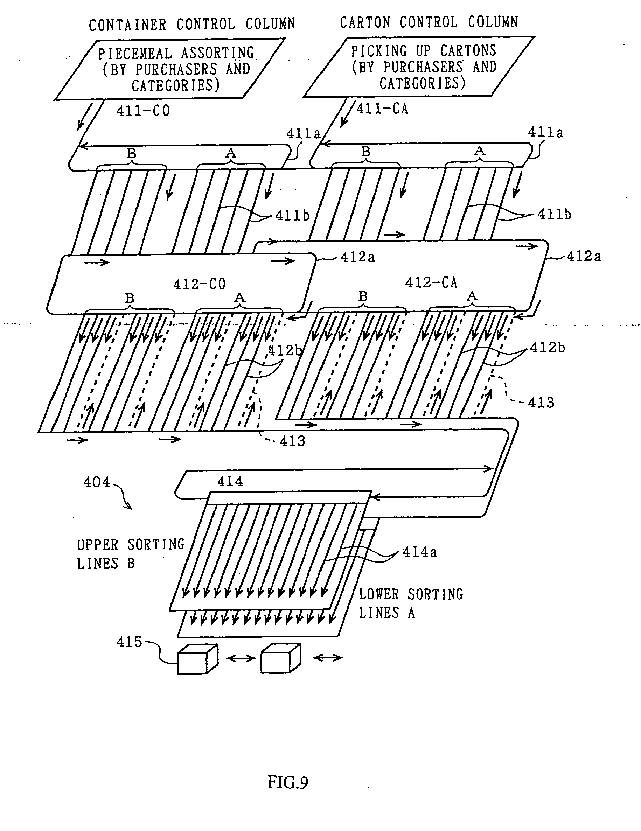

Fig. 9 is a flat view of one example of a buffer control line incorporated in the shipment sorting system of this invention. This deals with goods contained in containers or cartons, comprises two columns, one of which is for the control of containers and the other for the control of cartons, and includes two buffer control lines for each column.

Accordingly, there are four lines between inflow areas and a shipment sorting area 404, that is, container first line 411-CO, carton first line 411-CA, container second line 412-CO, and carton second line 412-CA.

The first line 411 consists of a loop storage line 411a where cartons or containers may be circuited before storage, and of plural, parallel straight storage lines 411b connected to the loop storage line 411a where containers are stored.

The straight storage line 411b is divided into two sections: containers are assigned to different sections according to their weight and categories. If a section is filled with containers, excess containers may be stored in the loop storage line 411a.

Likewise, the second line 412 consists of a loop storage line 412a and plural straight storage lines 412b, and the output ends of straight storage lines 411b are connected to the loop storage line 412a.

At this second step, containers are stored in the straight storage line 412b according to their weight, purchaser, category and stacking priority. If the line is filled with containers, excess containers may be stored in the loop storage 412a.

The straight storage line 412b is provided with a return line 413. In case one of the straight storage lines becomes full, it acts as a bypass through which excess cargo may be returned through the loop storage line 412a to the other straight storage line for storage.

Containers stored in a straight storage line 412b are then transported to a shipment sorting area 414, where they are sorted by sorters according to purchasers, categories, and the order of stacking, discharged into a shoot line 414a, and automatically stacked by an auto-stacker 415 onto wheeled cages. Heavy containers A are sorted at a lower shipment sorting area while light containers B are sorted at an upper shipment sorting area.
[1] The first and second lines may be substituted for one line, provided that cargoes can be stacked regardless of their weight and the order of display. One of the buffer lines may be provided with a return line so that it may reuse and control the requirements for the next step.
[2] The loop line may be one, provided that the number of cargoes per unit time is sufficiently small.
[3] The column may be one, provided that the division of containers and cartons is not required, or provided that the cargoes to be handled are so small that they can be safely handled with one column.
[4] In the exemplary embodiment, the shipment sorting area consists of upper and lower areas, but they may be substituted for one area, provided that requirements are not stern.
[5] The control system controlling the delivery of containers and the counterpart for cartons are connected to each other through loop lines, and can substitute for each other in case one of the two control system fails.

### 9) Variants of the system

This system comprises plural loop lines: one of the loop lines is used as a buffer where cargoes are checked whether they meet given requirements, and, when they are found to meet the requirements, they are delivered to a shipment sorting line, while a combination of the loop lines are used for checking cargoes whether they meet complex requirements concerning sorting and stacking, as well as facilitate speedy handling.

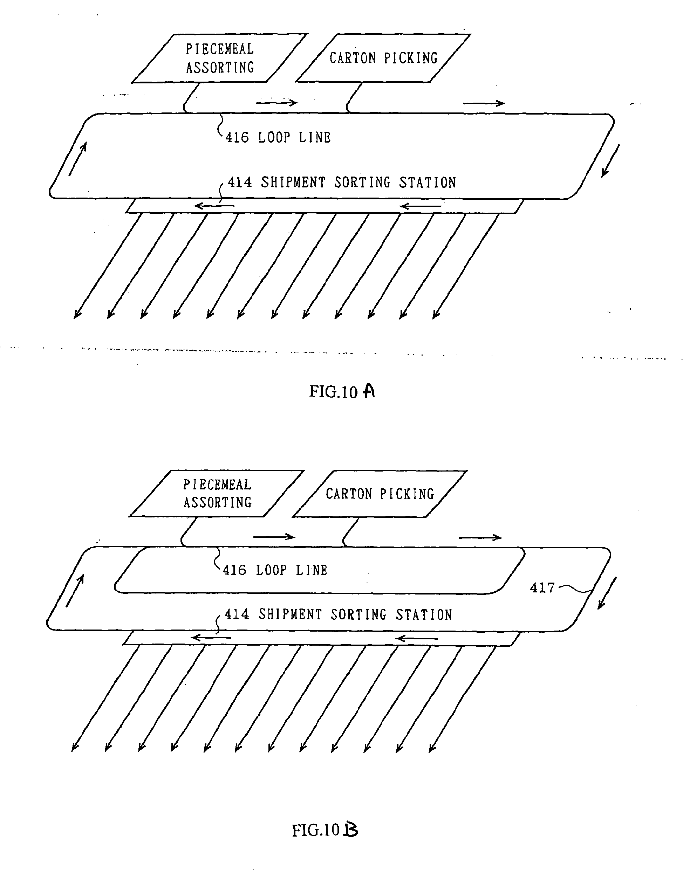

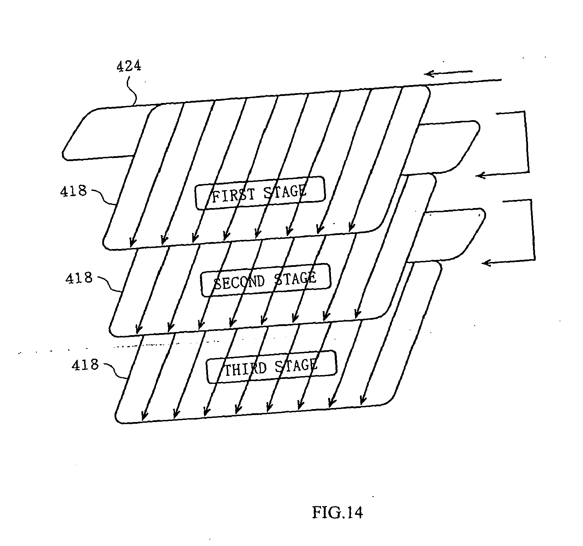

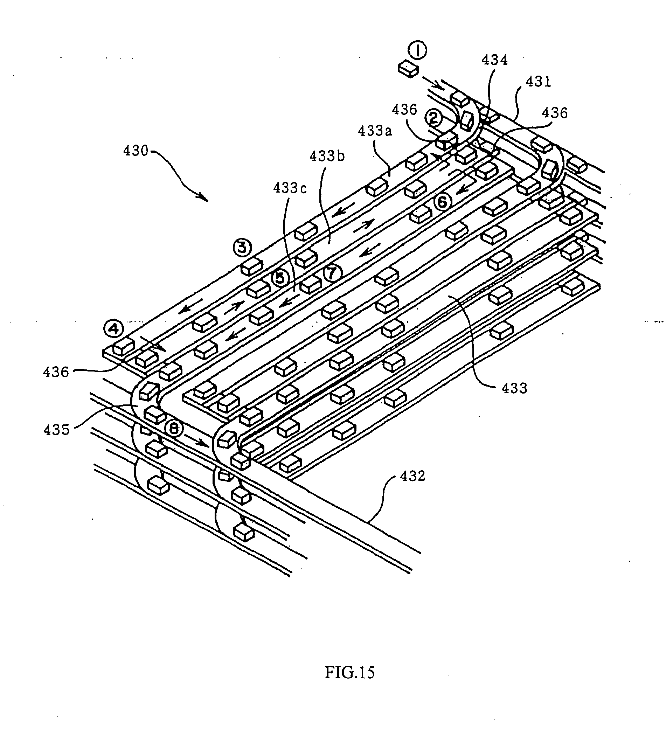

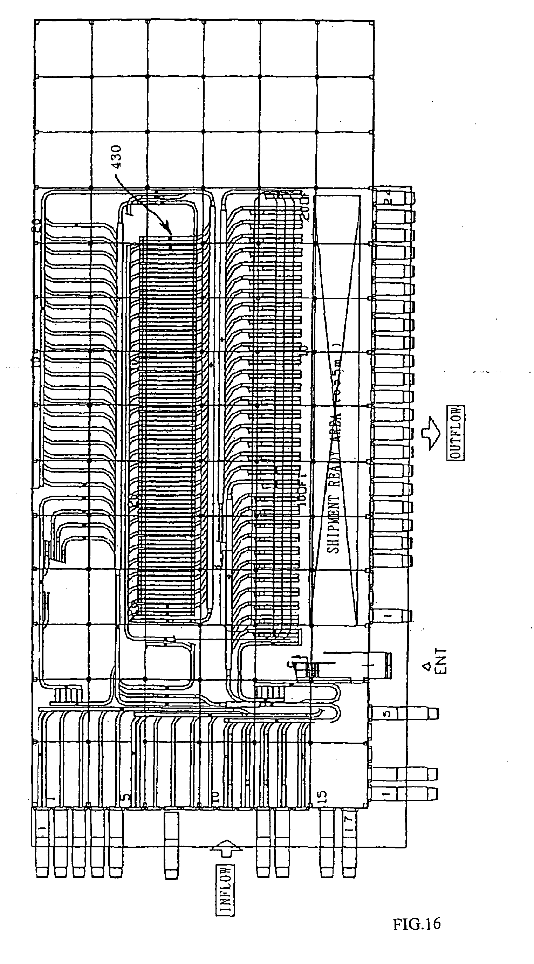

Accordingly, the system of this invention is not limited to such a system as depicted in Fig. 33, but can be modified or simplified in various ways according to given requirement for stacking.
9-1) Loop mode
   Fig. 10 is a schematic flat view of a buffer control line based on a loop used in the shipment sorting system of this invention. Fig. 10A is an embodiment where a loop line 416 is connected to a shipment sorting line 414, and the loop line 416 can store many cargoes such as containers to ease their sorting.
   Fig. 10B is another embodiment where duplicate loops exist; one loop 416 returns to the stem after depicting a loop and the other 417 returns through a shipment sorting area to the stem.
9-2) Main loop/sub-loop mode
   This is a high-performance variant of the system of Fig. 34B where sub-loop lines are introduced in the loop lines so that cargoes may be further divided according to the areas to which they will be delivered.

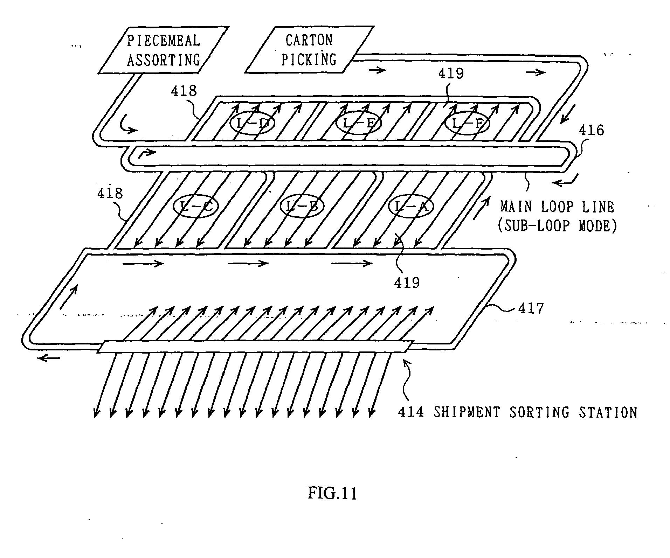

   Fig. 11 is a schematic flat view of a system comprising a main loop line and sub-loop lines incorporated in a buffer control line of the shipment sorting system of this invention. As shown in the figure, in this system, two sub-loop lines 418 are connected to a main loop line 416, thereby forming six sub-loop areas 419 (L-A to L-F).
   One of the sub-loop lines 418 is combined with the main loop line 416 and the shipment sorting loop line 417. Any number of sub-loop lines may be formed in the main loop line. The number of control lines in a sub-loop line may vary from one sub-loop line to another.

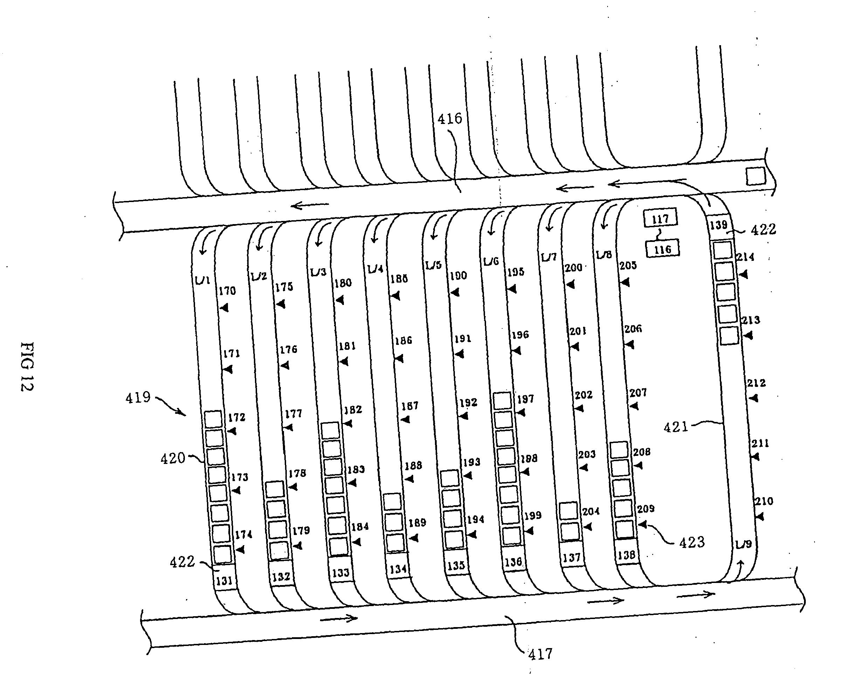

   Fig. 12 is a schematic flat view of one example of the sub-loop line area as depicted in Fig. 11. As shown in the figure, a sub-loop area 419 consists of plural buffer storage lines 420 running in parallel and divided according to destination areas, and a return line 421 for a sub-loop.
   At the exit of each line 420, 421, there is a discharging device 422, and along each line 420, 421, article sensors 423 are provided in its delivery direction such that a specified distance is inserted between the adjacent sensors.
   The functions of the units and elements of the system as depicted in Fig. 12 are as follows.
   [1] Primary sorting loop line: this is represented by the main loop line 416, and has a function to distribute cargoes to six sub-loop areas 419.
   [2] Buffer storage line 420 divided by destination areas: cargoes primarily sorted at the main loop line 416 is stored here for further sorting. Transportation along this line may occur as a result of sliding over an inclined surface or being driven by a belt conveyor.
   [3] Discharging device 422: this is a device to discharge cargoes from a buffer storage line to the shipment sorting loop line 417. This is not always required, provided that cargoes always moves on buffer storage lines through loop lines.
   [4] Delivery line of the shipment sorting loop line 417: this is the line to control the delivery of cargoes discharged from buffer storage lines 420 to the shipment sorting area.
   [5] Article sensor 423: this detects the passage of cargoes along a buffer storage line, to obtain data necessary for the management of stored cargoes and tracking of a target cargo. It can also be used for identifying the SEQ No. of a given cargo as needed.
   [6] Return line 421 for sub-loops: containers and cartons, while being moved through loop line areas from one to another, are sorted to satisfy given requirements. This line functions as a link connecting one loop line area with another.
   The sub-loop areas may be provided at both sides of the main loop or at one side. The number of sub-loop areas may be modified according to the sternness level of requirements. Further, the functions of sub-loop areas may not be the same but different: a special SEQing group of cargoes requiring stern handling may be stored in a sub-loop area dedicated for the purpose.

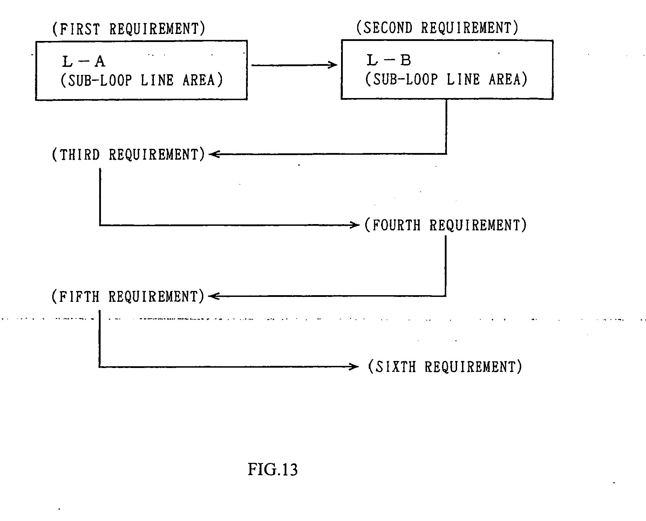

   Fig. 13 is a block diagram of a variant of the sub-loop line areas as depicted in Fig. 11 in which different sub-loop areas treat respective requirements. In this particular example, six requirements are treated.
9-3) Multi-stage mode
   Fig. 14 is a schematic flat view of an exemplary multi-layered sub-loop line area incorporated in a buffer control line of the shipment sorting system of this invention. In contrast with the aforementioned systems based on a combination of a main loop and sub-loops where sub-loop line areas are formed within the main loop line, this system comprises sub-loop lines placed one over another into a multi-layered structure.
   To put it more specifically, on both the upper and lower surfaces of a main line 424, multiple layers of sub-loop lines 418 are overlaid. This system will make it possible to effectively use a vacant space formed in the upper section of a building of a distribution center.
9-4) Straight storage line midway return mode
   Fig. 15 is a schematic flat view of a buffer control line comprising plural straight storage lines based on a midway return mode of the shipment sorting system of this invention. Fig. 16 is a flat view of an exemplary distribution center incorporating the buffer control line as depicted in Fig. 15.

The buffer control line as depicted in Fig. 15 is incorporated as a secondary line 430 at the shipment area of the distribution center of Fig. 16, and comprises multiple straight storage lines 433 running in parallel between inflow conveyors 431 and outflow conveyors 432.

For the lines 433, for example, every three lines are combined into a set; for such a set, a line 433a at the most upstream side is connected through an inflow junction 434 with an inflow conveyor 431; a line 433c at the most downstream side is connected through an outflow junction 435 with an outflow conveyor 432; the exit end of line 433a and the entry end of line 433b are connected with a cross-link 436, while the exit end of line 433b and the entry end of line 433c are connected with another cross-link 436; and therewith a continuous route is established for transportation of cargoes through the lines of the set.

Further, the exit end of the middle line 433b and the entry end of the upstream line 433a may be connected with a cross-link 436, thereby enabling cargoes on line 433b to return to line 433a.

Let us see what happens when containers enter this set of lines. Containers are carried to lines 433a and 433b; if containers are found to meet the requirements for sorting, they are carried from middle line 433b through line 433c to outflow conveyor 432 which carries them to a shipment sorting area; however, if the containers are found not to meet the requirements, they are returned from middle line 433b to the upstream line 433a.

The plural sets of numerous straight storage lines may be arranged into a multi-layered structure. The lines arranged into a multi-layered structure will have an advantage of ensuring a wide buffer storage space in a comparatively limited building space.

### 10) The precedence of the system of this invention over the conventional method in meeting the above requirements

10-1) Conventional method A conventional system comprises multi-layered racks to store cargoes, shuttle carriers to send or fetch cargoes to/from the racks, and ladders to elevate or lower cargoes during hauling, manages containers and cartons according to the properties of goods contained therein, and automatically performs the storage and hauling of cargoes, and the delivery of cargoes to a shipment sorting area.
   With this system, because the delivery of cargoes with a shuttle carrier occurs at a rate of one cargo per a shuttle carrier, the handling capacity of the system is very limited. If it be assumed that the system can store 1000 containers, and a shuttle carrier can handle a cargo in 1/1000 hour, its handling speed will be 1000 cargoes/hour which is low.
   Therefore, picking up and shipment must proceed in the timing to match this slow speed of 1000 cargoes/hour, and thus it is difficult for this system to handle a large quantity of goods. Moreover because this system further comprises a shuttle type delivery system, and vertically adjustable ladders, the investment for this system will be several times as high as that for the system of this invention based on a buffer line control mode, and its handling capacity will be 1/3 to 1/5 that of the latter.
   If this system is used for handling 3000 to 5000 cargoes per hour, naturally three to five of it will be required.
10-2) Shipment sorting system of this invention
   In contrast with the above conventional system the system of this invention ensures following advantages.
   [1] Sorting ability
      With this system, storage of cargoes is stored based on the buffer line storage mode, and thus the sorting ability can be determined by the routing speed of cargoes through the line. Therefore, it is possible to match the sorting ability with the routing speed of cargoes, provided that the speed of cargo movement through the loop line is made equal to the speed of cargo movement through the exit line.
      Let it be assumed for example that the speed of cargo movement through a line (routing speed) is 40m/min, and that cargoes go one after another at a rate of one cargo/m, then, 2400 cargoes pass through this line in an hour. If the routing speed is 60m/min, 3600 cargoes will pass; and if the routing speed is 100m/min, the number will rise to 6000 cargoes. If a higher routing speed is desired, the main line and the exit line may be multiplied: if they are multiplied n times, the routing speed will be simply raised in proportion to n, but the extra cost required for the introduction of additional lines will be limited to that required for the introduction of the multiplicated lines.
   [2] Cost merit
      Because this system introduces loaders with an inclined top platform at storage lines, it is possible to reduce the cost necessary for maintaining a unit storage capacity half to one ninth that of the conventional system.
   Because with this system it is possible to increase its handling capacity several times by simply duplicating the main loop line and the discharge line, and by paying the extra cost required from the introduction of additional lines as mentioned just above, it is far more cost effective than the conventional system.

### 11) Sorting for shipment

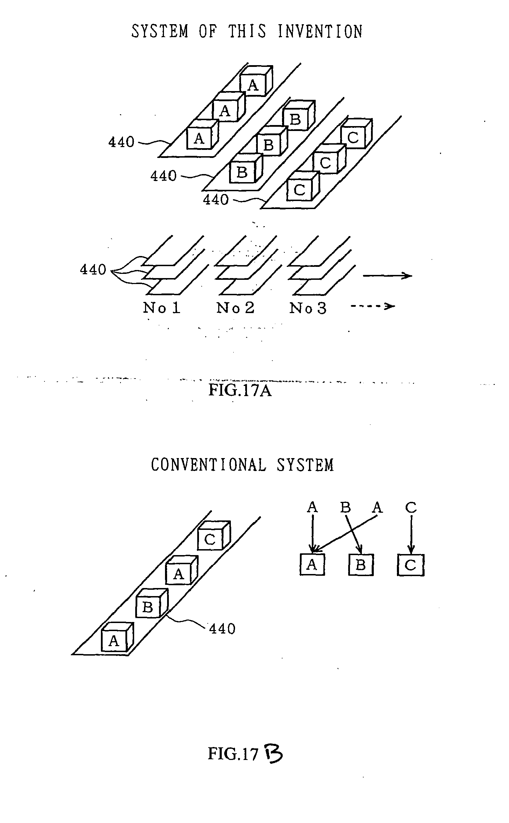

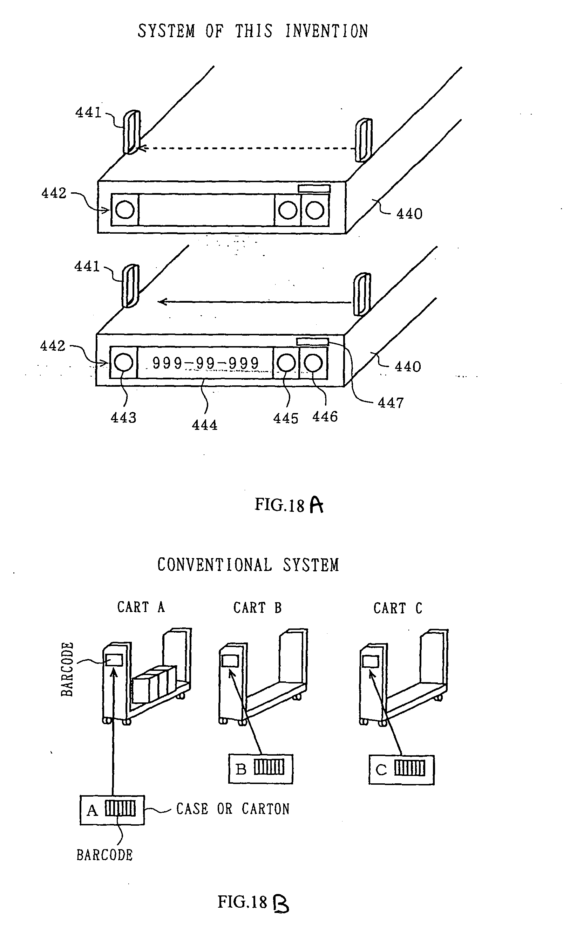

Fig. 17A is a perspective view of a shoot line at a shipment sorting area of this invention; and Fig. 17B is perspective and flat views of a shoot line of a conventional shipment sorting area. Fig. 18A is a perspective view of a sensor and a display device provided to the entry of a multi-layered shoot line of this invention; and Fig. 18B is a perspective view of a handcart used in the conventional system.

As shown in Fig. 17, a number of shoot lines at a shipment sorting area are placed one over another into an array 440, and then the arrays are arranged in rows; and as shown in Fig. 18 to the entry of each array 440 is provided an article sensor 441 (transmission type or reflection type photoelectric sensor or infra-red ray sensor) to detect passage of cargoes, and a display device 442 to indicate the content of passing cargoes, and required works for them.

Let us assume that, with the conventional system as shown in Fig. 17B, cargoes A, B and C addressed to different purchasers come to a sorting area. Because the system has no mechanical means to separate cargoes A, B and C, cargoes A, B and C are mixed inadvertently on a shoot line 440, and thus a human sorter must sort them again, to load them to respective carts. Even if they are transferred to appropriate carts, the porter must check each of them for whether it is transferred to a right cart, by comparing the barcode of the cargo with the barcode of the cart as shown in Fig. 18B.

Because of this, the work efficiency remains very low. The work efficiency of the conventional system is 100 - 130 cargoes/man.hour because of loading and checking being cumbersome.
[1] Assume that similarly to above cargoes A, B and C come to a shoot line of the system of this invention as shown in Fig. 17A. The cargoes are sorted and sent to respective shoot lines for separate handling. Therefore, the need for resorting by the human sorter before the cargoes are transferred to carts can be successfully obviated.
[2] Because the need for resorting is obviated, transference of cargoes to carts is smoothened and the work efficiency is improved, which will reduced the cost involved in the wage of workers for the work.
[3] Because the system of this invention incorporates an article sensor and a display device at each entry of shooting line as shown in Fig. 18A, it can obviate the need for checking based on the use of a scanner as is observed in a conventional system. Because this system uses the sensor and display device in combination with the multiple shoot arrays (circulation sorting), transportation of cargoes will be facilitated; the work efficiency will be improved; and the work speed will be increased. These advantages will result in the reduced overall cost.

To put it more specifically, because the system uses the sensor and display device in combination with the multiple shoot arrays, the porter can transfer cargoes in the order of arrival to appropriated carts as instructed, and for this work he may only walk a short distance between the end of shoot lines and carts. This will bring a sharp increase in the work efficiency.

For example, with this system, the work efficiency as high as 500 - 550 cargoes/man.hour will be possible. Each shoot line may have two tails at the end so that two porters may handle cargoes slid down the shoot line. This will contribute to the improvement of work efficiency.

The display device 442 comprises a work instruction lamp 443, a digital indicator 444, a work check button 445, renewed display instruction button 446, and an alarm buzzer 447, and receives a detection signal from an article sensor 441, and data from a host computer. The functions of relevant elements are as follows.
[1] Article sensor 441
   It detects the passage of cargoes on an activated shoot line, and sends detection signals which are utilized as a material for-the counting of delivered cargoes through the line. Or if it dispatches a detection signal from an inactivated line, that signal is utilized as indicating that the line is wrongly used.
[2] Work instruction lamp 443
   Green: the line is activated or ready for the passage of cargoes (blinking light--line just activated, and continuous light--line under operation).
   Yellow: the line will be activated next (passage of cargo being prohibited) (light--line's turn comes next).
   Red: the line is inactivated but detects passage of a cargo (passage of cargo being prohibited)(light in combination with a buzzing sound--the line is wrongly used).
[3] Digital indicator 444 presents followings:
   a) Purchaser,
   b) Requirements for sorting,
   c) Number to be received, and remaining number,
   d) End of display as indicated by dimmed brightness.
      The above items are differently defined by a number of digits, and their definitions may be varied as needed. The items may be indicated by different colors to improve visibility. The item c) is determined from the data sent by the relevant sensor, and is indicated on a real time basis.
[4] Work check button 445
   Cart full button: a brief push notifies a previous cart is filled, and a new cart is ready. The push also activates the cart label of the new cart.
   Printing a cart label: pressing over two seconds causes a cart label to be printed.
[5] Renewed display instruction button 446
   The total number to be received and the total number delivered: first push causes the total numbers of cargoes to be received divided by categories, and the total numbers delivered.
   Total numbers delivered: the number of carts delivered is displayed.
[6] Alarm buzzer

The alarm buzzer is activated if a sensor detects the passage of cargo through an inactivated line.

When work is over, the work instruction lamp 443 changes its color from green to red, and the digital indicator 444 becomes dim. If a cargo is passed through a wrong line, the work instruction lamp 443 gives a blinking red light, digital indicator 444 blinks, and alarm buzzer 447 gives an alarming sound.

Because the system of this invention is configured as above, it ensures following advantages.
1) Because this system comprises loop storage lines and straight storage lines, it becomes possible to transfer cargoes to carts at a shipment sorting area according to the order of their display at the purchasers' shops, thereby reducing the works and spaces necessary for display of goods at those shops.
2) Because the moving speed of cargoes along the loop storage line and the straight storage line can be made equal to the delivery speed of those cargoes at the exit, it becomes possible to easily and rapidly transfer cargoes to carts according to the purchaser, weight, category and order of display of those cargoes, thereby greatly improving the efficiency of sorting them.
3) Introduction of loop storage lines and straight storage lines can be performed by simply adding a necessary amount of conventional delivery lines to an existing system, which will require a small cost, as compared with the merits newly acquired.
4) If plural loop storage lines are combined for a joint operation, or if plural sub-loop areas are introduced, it will be possible to easily and rapidly sort cargoes for which stern requirements as regards sorting, stacking, etc. are imposed.
5) Because this system allows cargoes to be placed in shoot lines according to the sorting requirements imposed on the cargoes, the system can dispense with resorting often required for the conventional system dependent on a single shoot line where cargoes, in spite of being once sorted, are intermingled inadvertently. Moreover, because this system has a sensor and a display provided to each exit of shoot line, it can obviate the need for the conventional checking based on a scanner, and thus will make it possible to accelerate the delivery of cargoes, and to reduce human cost required for the work.

## Claims

1. A shipment sorting system including:
transferring unit cargoes containing articles to be shipped from an inflow area through a conveyor to a shipment sorting area;
sorting cargoes according to different shipment requirements in the shipment sorting area; and
transferring sorted unit cargoes to delivery carts for shipment,
comprising a buffer storage line to store unit cargoes which have been transferred from the inflow area through the conveyor to the shipment sorting area.

2. A shipment sorting system as described in claim 1 wherein the buffer storage line is a loop storage line to store unit cargoes after allowing cargoes to circulate through a loop.

3. A shipment sorting system as described in claim 1 wherein the buffer storage line is constituted of a plurality of straight storage lines arranged in parallel.

4. A shipment sorting system as described in claim 2 or 3 wherein a loop storage line or a plurality of straight storage lines are arranged in a plane, and such planes are overlaid two or more times.

5. A shipment sorting system as described in claim 1 or 2 wherein the buffer storage line is a plurality of loop storage lines being combined such that they are partially overlapped with each other, each of the loop storage line storing unit cargoes after allowing them to circulate through a loop.

6. A shipment sorting system as described in claim 5 wherein, of the plurality of loop storage lines, the outermost one is a shipment sorting loop line

7. A shipment sorting system as described in claim 1 wherein the buffer storage line is constituted of a main loop line, a sub-loop line connected to the main loop line with parts of the lines overlapped, and straight storage lines arranged in parallel within the loop of the sub-loop line.

8. A shipment sorting system as described in claim 1 wherein the buffer storage line is constituted of a main line, sub-loop lines connected to the main line with parts of the lines overlapped and overlaid two or more times vertically, and straight storage lines arranged in parallel within the loops of the sub-loop lines.

9. A shipment sorting system as described in claim 1 wherein the buffer storage line is constituted of a plurality of parallel running straight storage lines connected in series in such a way as to allow a unit cargo thereon to be continuously conveyed, and to allow a unit cargo coming to the junction between a line and a downstream line, to return to an upstream line or to go further along the downstream line.

10. A shipment sorting system as described in claim 5 wherein a plurality of shoot lines at a shipment sorting station are arranged into an array of multi-layered shoot lines, and unit cargoes are distributed to the rows of shoot lines according to their sorting requirements to be shot there.

11. A shipment sorting system as described in claim 10 wherein a sensor to detect the presence of a unit cargo and a display device to indicate the requirement of a unit cargo, and the work required for handling the cargo are provided to an end of each shoot line.
